# EUROPÄISCHE PATENTANMELDUNG

(11) **EP 0 868 088 A1**
(43) Veröffentlichungstag der Anmeldung: **30.09.1998**
(21) Anmeldenummer: 97105258.4
(22) Anmeldetag: 27.03.1997
(51) Int. Cl.: H04N 9/31, G02B 5/30

(54) **Lichtventilgesteuerte Projektionsvorrichtung und dielektrischer Polarisator**

(71) Anmelder: GRETAG Aktiengesellschaft, CH-8105 Regensdorf (CH)
(72) Erfinder: Roth, Philippe, 8114 Dänikon (CH); Jacocagni, Fulvio, 5415 Nussbaumen (CH)
(74) Vertreter: Schwabe, Hans-Georg, Dipl.-Ing.

(57) **Zusammenfassung**

Die lichtventilgesteuerte Projektionsvorrichtung umfasst eine Projektionslichtquelle (1) und eine Projektionsoptik (3). Der Strahlengang zwischen der Lichtquelle und der Projektionsoptik ist mittels farbselektiver Strahlenteiler (4,5) in drei räumlich getrennte Farbkanäle (R,B,G) aufgeteilt, welche vor der Projektionsoptik mittels Strahlenvereinigungsspiegel (6,7) wieder zusammengeführt sind. In jedem dieser drei Farbkanäle (R,B,G) ist ein aus einer polarisierenden Strahlenteileranordnung (12,22,32), einem Lichtventil (13,23,33) und einer Katodenstrahlröhre (14,24,34) bestehender Lichtmodulator (11,21,31) angeordnet. Eine Steuerelektronik (16) steuert nach Massgabe eines ihr zugeführten Videosignals die Katodenstrahlröhren (14,24,34) in den drei Farbkanälen (R,B,G) an und moduliert über die Lichtventile (13,23,33) das Projektionslicht bildmässig. Zwecks Erhöhung des Kontrastverhältnisses ist im Rotkanal (R) und im Blaukanal (B) dem Lichtmodulator (11,21) jeweils ein Vorpolarisator (15,25) vorgeschaltet und im Grünkanal (G) ein Nachpolarisator (35) nachgeschaltet. Der Vorpolarisator (15,25) umfasst eine Mehrzahl von abwechselnd nebeneinander angeordneten ersten und zweiten ebenen Streifen einer dielektrischen Polarisationsschicht, welche erste und zweite Streifen unter sich jeweils im wesentlich gleich orientiert sind, wobei die ersten Streifen symmetrisch zu den zweiten Streifen angeordnet sind und mit diesen eine dachartig gerippte Struktur bilden. Der Nachpolarisator (35) ist durch die entsprechend ausgelegte Beschichtung desjenigen dichroitischen Strahlenvereinigungsspiegels (6) realisiert, welcher den Blaukanal (B) und den Grünkanal (G) wieder zusammenführt.

Durch die spezielle Ausbildung der Vor- und Nachpolarisatoren (15,25,35) werden das Kontrastverhältnis verbessert und Lichtverluste vermieden, ohne die Kompaktheit der Projektionsvorrichtung zu beeinträchtigen.

## Beschreibung

Die Erfindung betrifft eine lichtventilgesteuerte Projektionsvorrichtung gemäss dem Oberbegriff des unabhängigen Anspruchs 1 sowie einen dielektrischen Polarisator gemäss dem Oberbegriff des unabhängigen Anspruchs 14.

Projektionsvorrichtungen der zur Rede stehenden Art modulieren ein von einer leistungsstarken Lichtquelle erzeugtes Lichtbündel bildmässig nach Massgabe eines elektrischen Videosignals, welches die darzustellende Bildinformation in elektrischer Form repräsentiert. Das Videosignal kann beliebigen Ursprungs sein und stammt in einer typischen Anwendungsform von einem Rechner. In diesem Fall dient die Projektionsvorrichtung als Sichtgerät für vom Rechner erzeugte Bildinformationen, beispielsweise etwa Präsentationen, als Ergänzung oder Ersatz für die üblicherweise verwendeten Monitore.

Bei solchen Projektionsvorrichtungen wird das von der Projektionslichtquelle erzeugte Licht mittels einer Projektionsoptik auf eine Projektionsfläche geworfen. Der Strahlengang zwischen der Lichtquelle und der Projektionsoptik ist mittels farbselektiver Strahlenteiler in drei räumlich getrennte optische Farbkanäle - üblicherweise rot, blau und grün - aufgeteilt; vor der Projektionsoptik sind die drei Farbkanäle wieder in einen einzigen Strahlengang zusammengeführt. In jedem Farbkanal befindet sich ein Lichtmodulator, mittels welchen die im entsprechenden Farbanteil des Videosignals enthaltenen Bildinformationen dem Projektionslicht aufgeprägt werden. Der Lichtmodulator arbeitet nach dem Polarisationsprinzip und besteht im wesentlichen aus einer polarisierenden Strahlenteileranordnung, einem Lichtventil und einer Katodenstrahlröhre, die über eine Steuerelektronik mit dem Videosignal beaufschlagt wird. In den Lichtmodulator eintretendes, unpolarisiertes Licht wird in der als Polarisator wirkenden Strahlenteileranordnung polarisiert. Das polarisierte Licht wird aufdas Lichtventil gelenkt, dort reflektiert und tritt nach einem weiteren Durchgang durch die dann als Analysator wirkende Strahlenteileranordnung wieder aus dem Modulator aus. Die Modulation kommt durch das Wirkungsprinzip des Lichtventils zustande, welches die Polarisationsrichtung des es beaufschlagenden Lichts in Abhängigkeit von seiner bildmässigen Beleuchtung durch die Katodenstrahlröhre dreht. Derartige Lichtmodulatoren auf Basis von Lichtventilen sind bekannt und in der einschlägigen Fachliteratur in extenso beschrieben und bedürfen daher keiner näheren Erläuterung.

Ein inhärentes Problem bei solchen Lichtmodulatoren und damit aufgebauten Projektionsvorrichtungen liegt in der Unvollkommenheit der zur Verfügung stehenden bzw. praktisch einsetzbaren Polarisatoren. Diese Unvollkommenheit besteht unter anderem darin, dass sie auch bei eingeschränktem Wellenlängenbereich keine perfekte Polarisation erlauben, sondern im Licht der jeweils gewünschten Polarisationsrichtung immer auch einer kleiner Anteil (einige Prozent) von Licht der unerwünschten anderen Polarisationsrichtung vorhanden ist. Diese unvollständige Polarisation ist insofern störend, als sie sich negativ auf das Kontrastverhältnis der Projektionsvorrichtung auswirkt.

Das Kontrastverhältnis bei den zur Rede stehenden Projektionsvorrichtungen kann im Prinzip dadurch verbessert werden, dass in den einzelnen Farbkanälen dem Lichtmodulator ein Vorpolarisator vor und/oder ein Nachpolarisator nachgeschaltet wird. Aus Gründen der Effizienz und des niedrigen Lichtverlusts kommen dafür nur dielektrische Schichtpolarisatoren in Frage. Diese sind an sich zwar kleinvolumig, müssen aber unter einem definierten Winkel (typisch 45°) zum Strahl liegen, und der Öffnungswinkel des Strahls muss sehr klein sein (typisch <±5°). Dies führt einerseits zu einer erheblichen Beschränkung der Anordnungsmöglichkeiten und anderseits zu Platzproblemen, weil insbesondere bei grösseren Strahlquerschnitten auch eine entspechend grosse Bautiefe in Strahlrichtung erforderlich ist, was sich einerseits negativ auf die Kompaktheit der Gesamtvorrichtung auswirkt bzw. anderseits ein Nachrüsten vorhandener Projektionsvorrichtungen mit solchen Vor- bzw. Nachpolarisatoren vereitelt.

Durch die vorliegende Erfindung soll nun diese Schwierigkeit überwunden und eine Projektionsvorrichtung der gattungsgemässen Art dahingehend verbessert werden, dass ohne nennenswerten zusätzlichen Raumbedarf und damit ohne Auswirkung auf die bauliche Kompaktheit der Vorrichtung ein besseres Kontrastverhältnis erzielt werden kann.

Die Lösung dieser ersten der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche 2-13.

Eine zweite Aufgabe der Erfindung besteht in der Bereitstellung eines dielektrischen Polarisators, welcher gegenüber herkömmlichen Polarisatoren dieser Art eine wesentlich geringere Einbautiefe erfordert.

Die Lösung dieser zweiten Aufgabe ergibt sich aus den kennzeichnenden Merkmalen des unabhängigen Anspruchs 14. Besonders vorteilhafte Ausgestaltungen und Weiterbildungen sind Gegenstand der abhängigen Ansprüche 15-18.

Die grundlegende Idee der Erfindung besteht also darin, einen dielektrischen Polarisator durch Aufteilung in einzelne Streifen und spezielle Anordnung derselben so umzugestalten, dass er eine erheblich geringere Einbautiefe erfordert und dadurch praktisch ohne zusätzlichen Platzbedarf in die Strahlengänge der Projektionsvorrichtung eingefügt oder sogar in den Lichtmodulator integriert werden kann. Durch die Aufteilung der dielektrischen Polarisationsschicht in einzelne Streifen lässt sich bei geeigneter gegenseitiger Anordnung derselben bzw. durch geeignete Ausbildung des sie tragenden Substrats ausserdem eine z. B. bündelnde optische Wirkung und/oder eine optimale Anpassung der Winkel an ein nicht-paralleles Strahlenbündel erzielen.

Im folgenden wird die Erfindung anhand der Zeichnung näher erläutert. Es zeigen:
- Fig. 1: eine schematische Darstellung der wesentlichsten Teile einer erfindungsgemässen Projektionsvorrichtung,
- Fig. 2: eine schematische Darstellung eines erfindungsgemässen Polarisators,
- Fig. 3: eine schematische Darstellung einer Variante des Polarisators,
- Fig. 4: einen Schnitt durch eine typische polarisierende Strahlenteileranordnung,
- Fig. 5: einen Schnitt durch das Eintrittsfenster der Strahlenteileranordnung nach der Linie V-V der Fig.4 und
- Fig. 6: eine Aufsicht der Eintrittslinse in Richtung des Pfeils VI der Fig.4.

Die dargestellte Projektionsvorrichtung umfasst eine leistungsstarke Projektionslichtquelle 1, eine Kondensoroptik 2 und eine Projektionsoptik 3. Zwischen der Kondensoroptik 2 und der Projektionsoptik 3 ist der Strahlengang mittels zweier farbselektiver dichroitischer Strahlenteiler 4 und 5 in drei räumlich getrennte Farbkanäle R, B und G für die Farben rot, blau und grün aufgetrennt, welche vor der Projektionsoptik 3 durch zwei dichroitische Strahlenvereinigungsspiegel 6 und 7 wieder zusammengeführt sind. Drei Spiegel 8, 9 und 10 dienen zur Umlenkung der einzelnen Strahlengänge und haben sonst keine Funktion. Zwischen dem ersten und dem zweiten dichroitischen Strahlenteiler 4 bzw. 5 befindet sich ein Filter zur Beschneidung der Grünanteile des Lichts, nach dem zweiten dichroitischen Strahlenteiler 5 ist ein Filter zur Beschneidung der Blauanteile des Lichts vorgesehen.

In jedem der drei räumlich getrennten Farbkanäle R, B und G befindet sich ein nach dem Polarisationsprinzip arbeitender Lichtmodulator 11 bzw. 21 bzw. 31. Jeder Lichtmodulator besteht im wesentlichen aus drei Komponenten, und zwar aus einer polarisierenden Strahlenteileranordnung 12 bzw. 22 bzw. 32, einem sog. Lichtventil 13 bzw. 23 bzw. 33 und einer Katodenstrahlröhre 14 bzw. 24 bzw. 34. Die Katodenstrahlröhren 14, 24 und 34 werden von einer Steuerelektronik 16 getrieben, der an einem Eingang 17 ein Videosignal zugeführt wird, welches die Bildinformation des mittels der Projektionsvorrichtung darzustellenden Bilds enthält. Die Katodenstrahlröhren erhalten jeweils nur die Rot-, Blau- bzw. Grün-Auszüge der Bildinformation und stellen diese auf ihren Leuchtschirmen dar, welche wiederum die ihnen zugeordneten Lichtventile beaufschlagen.

Die polarisierende Strahlenteileranordnungen 12, 22 und 32 enthalten im wesentlichen einen polarisierenden Strahlenteiler 121 (Fig.4), welcher eine Doppelfünktion als Polarisator und als Analysator aulweist. In die Anordnung eintretendes Licht wird vom Strahlenteiler polarisiert und auf das Lichtventil gelenkt. Dort wird es zum Strahlenteiler reflektiert, wobei die Polarisationsrichtung nach Massgabe des von der Katodenstrahlröhre erzeugten und das Lichtventil steuernden Bildmusters gedreht wird. Das reflektierte Licht wird vom Strahlenteiler je nach Polarisationszustand mehr oder weniger ungehindert transmittiert (analysiert) und tritt schliesslich wieder aus der Anordnung aus.

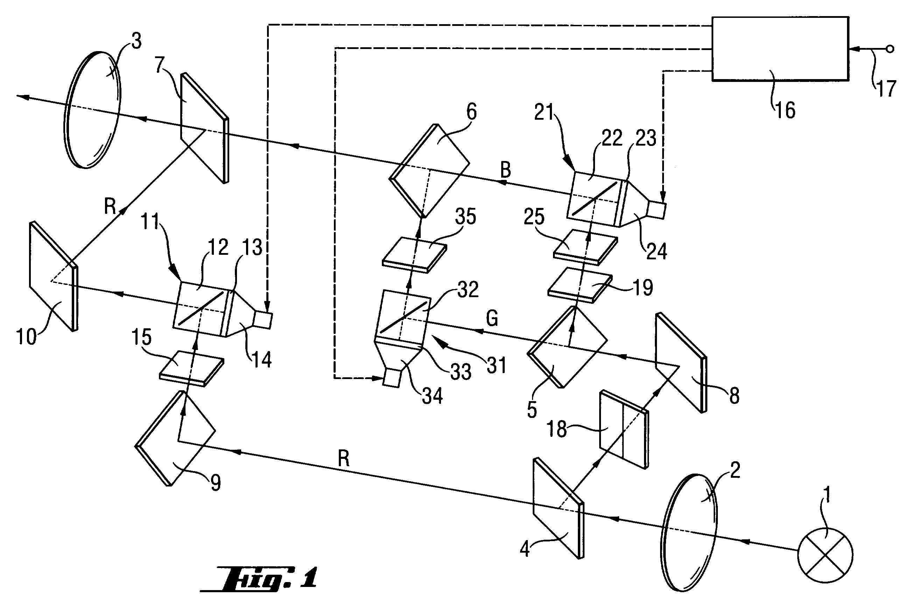

Soweit entspricht die in der Fig. 1 gezeigte Projektionsvorrichtung vollumfänglich herkömmlichen Projektionsvorrichtungen dieser Art, beispielsweise etwa dem Fernsehgrossbildprojektor 7200G der Firma AmPro Light Valve Products, Mountain View, Kalifornien, USA. Eine detailliertere Beschreibung des Aufbaus und der Funktionsweise erübrigt sich daher für den Fachmann.

Wie schon einleitend erwähnt, weisen herkömmliche Projektionsvorrichtungen dieser Art ein für viele Anwendungsfälle ungenügendes Kontrastverhältnis auf (wünschenswert wären Werte > 100:1). Der Grund dafür liegt, wie ebenfalls schon erwähnt, im zwar hohen, aber nicht 100%igen Wirkungsgrad der verfügbaren Polarisatoren. Bei der erfindungsgemässen Projektionsvorrichtung ist daher im roten und im blauen Farbkanal R bzw. B dem Lichtmodulator 11 bzw. 21 je ein speziell ausgebildeter Vorpolarisator 15 bzw. 25 vorgeschaltet. Im grünen Farbkanal G ist dem Lichtmodulator 31 ein spezieller Nachpolarisator 35 nachgeschaltet. Die Vorpolarisatoren 15 und 25 und der Nachpolarisator 35 polarisieren das Licht in die gleichen Richtungen wie die Strahlenteiler in den polarisierenden Strahlenteileranordnungen 12 bzw. 22 bzw. 32 der jeweils zugeordneten Lichtmodulatoren 11 bzw. 21 bzw. 31 und blenden die Komponente mit der jeweils unerwünschten Polarisationsrichtung aus. Der Grund, warum im Grünkanal G kein Vorpolarisator sondern ein Nachpolarisator eingesetzt ist, liegt an einer konstruktiven Besonderheit der dargestellten Projektionsvorrichtung: Zugunsten einer kompakten Bauweise ist der Strahlengang im Lichtmodulator 35 im Grünkanal G gegenüber denjenigen im Rot- und im Blaukanal umgekehrt, Eintritt und Austritt sind also vertauscht. Ein Vorpolarisator wie im Rot- und Blaukanal wäre also hier ungeeignet, weil er an dieser Stelle den unvollkommenen Polarisationseffekt der Reflexion nicht kompensieren kann. Falls der Strahlengang im Lichtmodulator 31 des Grünkanals G gleich wäre wie diejenigen im Rot- und im Blaukanal, wäre selbstverständlich auch im Grünkanal ein Vorpolarisator anstelle eines Nachpolarisators vorgesehen, und umgekehrt.

In der Fig. 1 sind die Vor- und Nachpolarisatoren nur schematisch angedeutet. Ihr Aufbau und ihre jeweilige genaue Einbaulage ergeben sich aus den nachfolgenden Ausführungen.

Die Vor- und Nachpolarisatoren bewirken also eine zusätzliche Unterdrückung der Lichtkomponenten mit der jeweils unerwünschten Polarisationsrichtung vor bzw. nach der Modulation und steigern dadurch das erreichbare Kontrastverhältnis erheblich. Die Schwierigkeit besteht lediglich darin, dass herkömmliche Polarisatoren - aus praktischen Gründen kommen ausschliesslich dielektrische Polarisatoren in Frage - wegen der zwingend erforderlichen Winkellage (typisch 45°) zur Strahlrichtung erheblichen Platz in Strahlrichtung benötigen und deshalb bei kompakter Bauweise der Vorrichtung praktisch nirgends im Strahlengang unterzubringen sind. Die Anordnung solcher Polarisatoren muss ausserdem in einem Bereich des Strahlengangs erfolgen, wo der Öffnungswinkel nicht grösser als typisch ±5° ist, und gerade da ist meistens nicht ausreichend Platz vorhanden.

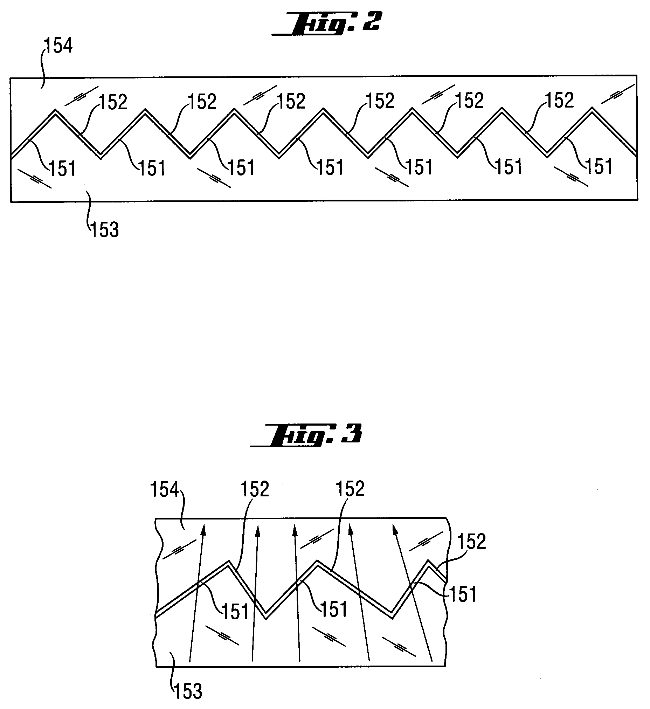

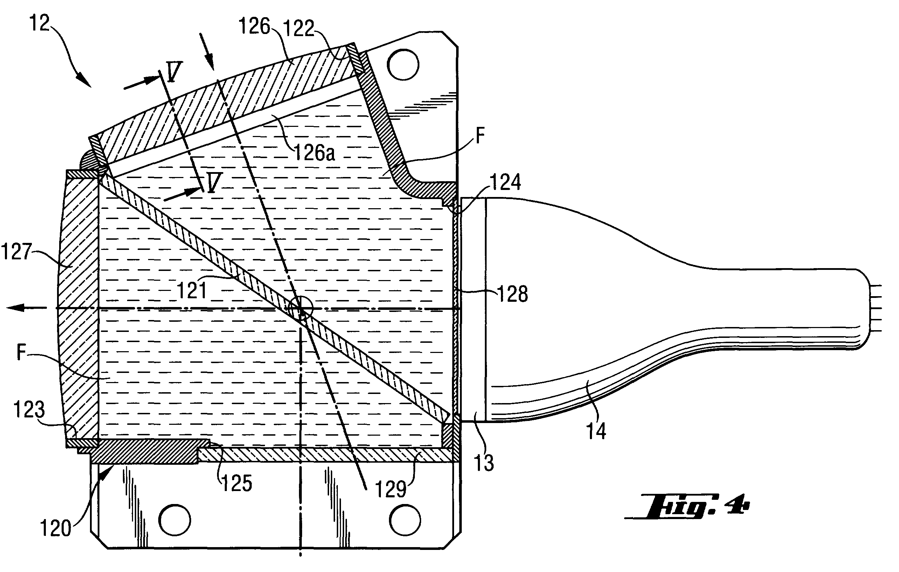

Hier kommt nun der grundlegende Gedanke der vorliegenden Erfindung zum Tragen: Anstelle herkömmlicher, ebener dielektrischer Polarisatoren wird für die Vorpolarisatoren 15 und 25 ein spezieller, erfindungsgemäss ausgebildeter Polarisator eingesetzt. Dieser ist, wie die Figuren 2 und 3 schematisch zeigen, aus einer Mehrzahl von ersten und zweiten Streifen 151 bzw. 152 aus einer herkömmlichen dielektrischen Polarisationsschicht zusammengesetzt, wobei die ersten und zweiten Streifen jeweils abwechselnd nebeneinander angeordnet sind und zusammen eine dachartige Struktur bilden, welche im Querschnitt als Zick-Zack-Linie erscheint. Die ersten und die zweiten Streifen sind also jeweils unter sich im wesentlichen gleich orientiert. Vorzugsweise sind etwa 5-10, insbesondere 7, erste und zweite Streifen vorgesehen. Die Streifen 151 und 152 sind auf einem Substrat 153 (in der Regel optisches Glas) angeordnet und durch ein zum Substrat gegengleiches Deckstück 154 (in der Regel ebenfalls optisches Glas) abgedeckt. Das von Substrat 153 und Deckstück 154 gebildete Sandwich bildet, abgesehen vom Polarisationseffekt, eine Struktur mit optisch planparalleler Wirkung.

Der so ausgebildete zusammengesetzte Polarisator wird senkrecht in den Strahlengang eingefügt, d.h. die planparallen Ein- und Austrittsflächen liegen senkrecht zur Strahlrichtung. Bezogen auf die Strahlrichtung sind die ersten und zweiten Streifen 151 und 152 jeweils um 45° geneigt angeordnet, wobei die Neigungswinkel der ersten Streifen symmetrisch zu denen der zweiten Streifen sind. Durch die Aufteilung der Polarisationsschicht in eine Mehrzahl von ersten und zweiten Streifen wird eine Reduktion der Einbautiefe (in Strahlrichtung) im wesentlichen um den Faktor (Anzahl Streifen) erreicht.

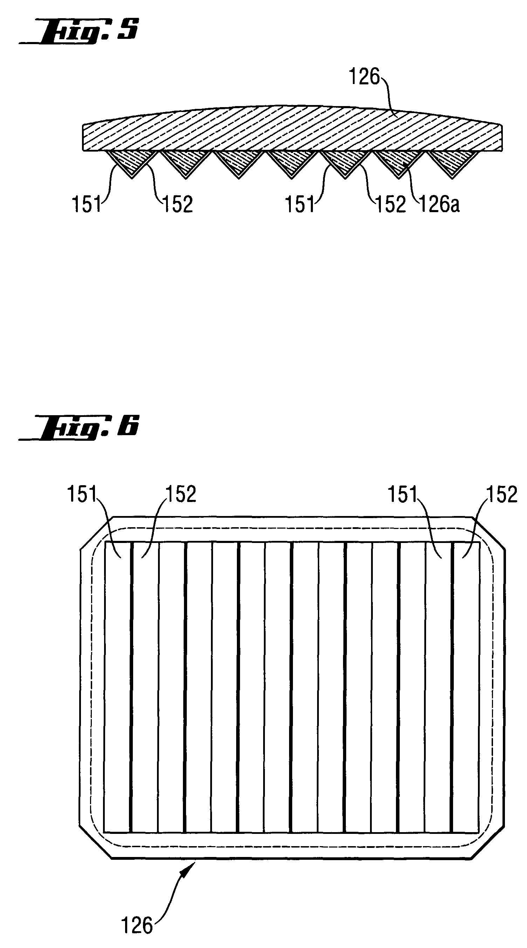

Wenn die Streifen anstatt auf einem ebenen auf einem zylindrisch oder sphärisch gekrümmten Substrat angeordnet werden, lässt sich zusätzlich noch eine optische Wirkung, beispielsweise eine gewünschte bündelnde Wirkung erzielen (Fig.5). Ausserdem lassen sich die Winkellagen der ersten und zweiten Streifen optimal an ein nichtparalleles Strahlenbündel anpassen, wenn die ersten und zweiten Streifen, wie in Fig. 3 gezeigt, jeweils unter sich nicht streng parallel ausgerichtet sondern geringfügig gegenseitig geneigt angeordnet sind.

Der erfindungsgemäss ausgebildete zusammengesetzte Polarisator lässt sich nach einer besonders vorteilhaften Ausgestaltung der Erfindung als Vorpolarisator 15 bzw. 16 unmittelbar in die Lichtmodulatoren 11 und 21 integrieren. Im folgenden wird dies anhand der Figuren 4-6 näher erläutert.

Fig. 4 zeigt einen Schnitt durch die polarisierende Strahlenteileranordnung 12 des Lichtmodulators 11 im Rotkanal R. Die entsprechende Konfiguration im Blaukanal B ist identisch.

Die Strahlenteileranordnung 12 umfasst ein mit vier Öffnungen ausgestattetes Gehäuse 120. Die vier Öffnungen sind ein Eintrittsfenster 122, ein Austrittsfenster 123, ein Lichtventilfenster 124 und ein Ausblendfenster 125. Im Eintrittsfenster 122 befindet sich eine Eintrittslinse 126, im Austrittsfenster eine Austrittslinse 127. Die beiden übrigen Fenster sind mit planen Scheiben 128 und 129 mechanisch verschlossen. Im Inneren des Gehäuses 120 befindet sich ein dichroitischer polarisierender Strahlenteiler 121, welcher den Gehäuseinnenraum so in zwei Hälften aufteilt, dass das Eintrittsfenster 122 und das Lichtventilfenster 124 in der einen Hälfte und das Austrittsfenster 123 und das Ausblendfenster 125 in der anderen Hälfte zu liegen kommen. Der gesamte Innenraum des Gehäuses 120 ist mit einer Flüssigkeit F gefüllt, welche im wesentlichen denselben Brechungsindex aufweist wie das Material, aus dem die Eintritts- und die Austrittslinse und das Substrat des polarisierenden Strahlenteilers bestehen. Das Lichtventil 13 ist direkt am Lichtventilfenster 124 montiert, die Katodenstrahlröhre 14 schliesst mit ihrem Schirm direkt an das Lichtventil 13 an.

Soweit entspricht die Strahlenteileranordnung 12 herkömmlichen Anordnungen dieser Art. Gemäss einem weiteren wichtigen Aspekt der Erfindung ist nun, wie schon erwähnt, der Vorpolarisator 15 direkt in die Strahlenteileranordnung 12 integriert. Dazu ist die Eintrittslinse 126 auf ihrer Innenseite mit einer dachartigen bzw. symmetrisch sägezahnartigen Profil-Struktur 126a versehen, auf der die ersten und zweiten Streifen 151 bzw. 152 der polarisierenden Schicht des Vorpolarisators 15 angeordnet sind (Fig. 5); die Profil-Struktur 126a bildet also das in Fig. 2 gezeigte Substrat 153 für die Streifen. Die Profil-Struktur 126a kann einstückig mit der Eintrittslinse 126 ausgebildet sein oder aus einzelnen dreikantigen Profilstäben bestehen, welche an der Rückseite der Eintrittslinse aufgekittet sind. Falls die Flüssigkeit F im Gehäuse 120 den gleichen Brechungsindex autweist wie die Profil-Struktur 126a, ist das in den Figuren 2 und 3 gezeigte Deckstück 154 nicht erforderlich. Die Figuren 5 und 6 zeigen die Eintrittslinse 126 im Schnitt und in einer Hinteransicht und verdeutlichen den Aufbau der Profil-Struktur 126a.

Der Nachpolarisator 35 im Grünkanal G ist anders realisiert. Gemäss einem weiteren Aspekt der Erfindung ist der Nachpolarisator 35 direkt in den dichroitischen Strahlenvereinigungsspiegel 6, welcher den Grünkanal G und den Blaukanal B wieder zusammenführt, integriert. Dazu ist die dielektrische Beschichtung dieses Strahlenvereinigungsspiegels 6 hinsichtlich ihrer polarisierenden Eigenschaften so optimiert, dass sich zusätzlich noch eine Unterdrückung der Lichtkomponente mit der unerwünschten Polarisationsrichtung ergibt. Die für die Erzielung dieser Eigenschaften notwendige Ausbildung der dielektrischen Schicht des Strahlenvereinigungsspiegels 6 ist dem Fachmann bekannt und bedarf deshalb keiner weiteren Erläuterung.

Die Funktion des Nachpolarisators 35 kann auch in den dichroitischen Strahlenvereinigungsspiegel 7 gelegt oder auf die beiden Strahlenvereinigungsspiegel 6 und 7 aufgeteilt werden. Dadurch lässt sich der erwünschte Nachpolarisationseffekt noch optimieren.

## Patentansprüche

1. Lichtventilgesteuerte Projektionsvorrichtung mit einer Projektionslichtquelle (1) und einer Projektionsoptik (3), wobei der Strahlengang zwischen der Lichtquelle und der Projektionsoptik mittels farbselektiver Strahlenteiler (4,5) in drei räumlich getrennte Farbkanäle (R,B,G) aufgeteilt ist und diese drei Farbkanäle vor der Projektionsoptik mittels Strahlenvereinigungsspiegel (6,7) wieder zusammengeführt sind, wobei in jedem dieser drei Farbkanäle (R,B,G) ein aus einer polarisierenden Strahlenteileranordnung (12, 22, 32), einem Lichtventil (13, 23, 33) und einer Katodenstrahlröhre (14,24,34) bestehender Lichtmodulator (11,21,31) angeordnet ist, wobei ferner in wenigstens einem der drei Farbkanäle dem Lichtmodulator ein Vorpolarisator (15,25) vorgeschaltet ist, und wobei eine Steuerelektronik (16) für die Katodenstrahlröhren in den drei Farbkanälen vorgesehen ist, die nach Massgabe eines ihr zugeführten Videosignals die Katodenstrahlröhren (14,24,34) ansteuert und über die Lichtventile (13,23,33) das Projektionslicht bildmässig moduliert, dadurch gekennzeichnet, dass der Vorpolarisator (15,25) eine Mehrzahl von abwechselnd nebeneinander angeordneten ersten und zweiten ebenen Streifen (151,152) einer dielektrischen Polarisationsschicht umfasst, welche erste und zweite Streifen (151,152) unter sich jeweils im wesentlich gleich orientiert sind, wobei die ersten Streifen (151) symmetrisch zu den zweiten Streifen (152) angeordnet sind und mit diesen eine dachartig gerippte Struktur bilden.

2. Vorrichtung nach Anspruch 1, dadurch gekennzeichnet, dass die ersten und zweiten Streifen (151,152) des Vorpolarisators (15,25) in eine optische Struktur (153,154) mit im wesentlichen planparallelem optischen Verhalten eingebettet sind.

3. Vorrichtung nach einem der vorangehenden Ansprüche, dadurch gekennzeichnet, dass der Vorpolarisator (15,25) in die polarisierende Strahlenteileranordnung (12,22) des Lichtmodulators (11,21) integriert ist.

4. Vorrichtung nach einem der vorangehenden Ansprüche, dadurch gekennzeichnet, dass die polarisierende Strahlenteileranordnung (12,22) ein Eintrittsfenster (122), ein Austrittsfenster (123) und ein Lichtventilfenster (124) sowie einen polarisierenden Strahlenteiler (121) aufweist, und dass der Vorpolarisator (15,25) unmittelbar im Eintrittsfenster (122) der polarisierenden Strahlenteileranordnung (12,22) angeordnet ist.

5. Vorrichtung nach einem der vorangehenden Ansprüche, dadurch gekennzeichnet, dass die ersten und zweiten Streifen (151,152) des Vorpolarisators (15,25) auf einem Substrat (153) angeordnet sind.

6. Vorrichtung nach Anspruch 5, dadurch gekennzeichnet, dass das Substrat (153) zylindrisch oder sphärisch gekrümmt ist.

7. Vorrichtung nach den Ansprüchen 4 und 5, dadurch gekennzeichnet, dass im Eintrittsfenster (122) der polarisierenden Strahlenteileranordnung (12,22) eine Eintrittslinse (126) angeordnet ist und dass die Eintrittslinse (126) das Substrat (126a) für die ersten und zweiten Streifen (151,152) des Vorpolarisators (15,25) bildet.

8. Vorrichtung nach einem der vorangehenden Ansprüche, dadurch gekennzeichnet, dass der Vorpolarisator (15,25) je etwa 5-10 erste und zweite Streifen (151,152) umfasst.

9. Vorrichtung nach einem der vorangehenden Ansprüche, dadurch gekennzeichnet, dass die ersten und zweiten Streifen (151,152) des Vorpolarisators (15,25) jeweils unter sich geringfügig so gegeneinander geneigt angeordnet sind, dass sie optimal an die Winkelverteilung der Strahlen im Bündel angepasst sind.

10. Vorrichtung nach einem der vorangehenden Ansprüche, dadurch gekennzeichnet, dass in wenigstens einem der drei Farbkanäle (R,B,G) dem Lichtmodulator (11,21,31) ein Nachpolarisator (35) nachgeschaltet ist.

11. Vorrichtung nach Anspruch 10, dadurch gekennzeichnet, dass zum Zusammenführen der drei Farbkanäle (R,B,G) dichroitische Strahlenvereinigungsspiegel (6,7) vorgesehen sind, und dass der Nachpolarisator (35) auf wenigstens einem dieser dichroitischen Strahlenvereinigungsspiegel (6,7) angeordnet ist.

12. Vorrichtung nach einem der vorangehenden Ansprüche, dadurch gekennzeichnet, dass die drei Farbkanäle ein Rotkanal (R), ein Blaukanal (B) und ein Grünkanal (G) sind, und dass ein Vorpolarisator (15,25) jeweils im Rotkanal (R) und im Blaukanal (B) angeordnet ist.

13. Vorrichtung nach den Ansprüchen 11 und 12, dadurch gekennzeichnet, dass der Nachpolarisator (35) im Grünkanal (G) vorgesehen und wenigstens auf demjenigen dichroitischen Strahlenvereinigungsspiegel (6) angeordnet ist, welcher den Grünkanal (G) und den Blaukanal (B) zusammenführt.

14. Polarisator mit einer auf einem Substrat (153) angeordneten dielektrischen Polarisationsschicht, dadurch gekennzeichnet, dass die dielektrische Polarisationsschicht in eine Mehrzahl von abwechselnd nebeneinander angeordneten ersten und zweiten ebenen Streifen (151,152) aufgeteilt ist, welche erste und zweite Streifen (151,152) unter sich jeweils im wesentlich gleich orientiert sind, wobei die ersten Streifen (151) symmetrisch zu den zweiten Streifen (152) angeordnet sind und mit diesen eine dachartig gerippte Struktur bilden.

15. Polarisator nach Anspruch 14, dadurch gekennzeichnet, dass die ersten und zweiten Streifen (151,152) in eine optische Struktur (153,154) mit im wesentlichen planparallelem optischen Verhalten eingebettet sind.

16. Polarisator nach Anspruch 14, dadurch gekennzeichnet, dass das Substrat (153) zylindrisch oder sphärisch gekrümmt ist.

17. Polarisator nach einem der Ansprüche 14-16, dadurch gekennzeichnet, dass die dielektrische Polarisatorschicht in je etwa 5-10 erste und zweite Streifen (151,152) aufgeteilt ist.

18. Polarisator nach einem der Ansprüche 14-17, dadurch gekennzeichnet, dass die ersten und zweiten Streifen (151,152) jeweils unter sich geringfügig so gegeneinander geneigt angeordnet sind, dass sie optimal an die Winkelverteilung der Strahlen im Bündel angepasst sind.
